**Europäisches Patentamt**

**European Patent Office**

**Office européen des brevets**

(19)

(11) Publication number : **0 354 161 B1**

# (12) EUROPEAN PATENT SPECIFICATION

(45) Date of publication of patent specification :
23.09.92 Bulletin 92/39

(51) Int. Cl.⁵ : **F04C 29/06, F04C 29/08**

(21) Application number : **89630127.2**

(22) Date of filing : **02.08.89**

(54) **Muffler/check valve assembly for scroll compressor.**

(30) Priority : **02.08.88 US 227389**

(43) Date of publication of application :
**07.02.90 Bulletin 90/06**

(45) Publication of the grant of the patent :
**23.09.92 Bulletin 92/39**

(84) Designated Contracting States :
**DE ES FR IT SE**

(56) References cited :
PATENT ABSTRACTS OF JAPAN vol. 10, no.
196 (M-497)(2252) 10 July 1986, & JP-A-61
40473 (Toshiba) 26 February 1986
PATENT ABSTRACTS OF JAPAN vol. 11, no.
250 (M-616)(2697) 14 August 1987, & JP-A-62
58074 (Hitachi) 13 March 1987
PATENT ABSTRACTS OF JAPAN vol. 8, no.
170 (M-315)(1607) 07 August 1984, & JP-A-59
63395 (Toshiba) 11 April 1984
PATENT ABSTRACTS OF JAPAN vol. 12, no.
27 (M-662)(2874) 27 January 1988, & JP-A-62
182494 (Mitsubishi Heavy Ind.) 10August 1987

(73) Proprietor : **CARRIER CORPORATION**
**Carrier Tower 6304 Carrier Parkway P.O. Box**
**4800**
**Syracuse New York 13221 (US)**

(72) Inventor : **Etemad, Shahrokh**
**155 Short Beach Road Apt. B-202**
**Stratford Connecticut 06497-2452 (US)**
Inventor : **Fraser, Howard J., Jr.**
**1556 Berry Road**
**Lafayette New York 13084 (US)**
Inventor : **Lane, William R.**
**104 Wellington Road**
**Dewitt New York 13214 (US)**

(74) Representative : **Waxweiler, Jean et al**
**OFFICE DENNEMEYER S.à.r.l. P.O. Box 1502**
**L-1015 Luxembourg (LU)**

EP 0 354 161 B1

## Description

### Background Of The Invention

Hermetic compressors are designated high side or low side depending upon whether a major portion of the shell or casing is filled with discharge gas or suction gas, respectively. Since suction gas is delivered through the shell to the compressor and discharge gas is delivered from the compressor through the shell to the refrigeration system, it is necessary to keep the two flows isolated from each other. In high side compressors, for example, it is common to deliver the suction gas via a suction line directly to the compression chamber and to pass the compressed gas to the interior of the shell and then out the discharge line. For low side compressors, if an internal muffler is desired (as shown in Patent Abstracts of Japan vol. 12, no. 27 (M-662)(2874) 27 January 1988, & JP-A-62 182 494 (MITSUBISHI HEAVY IND.) 10 August 1987), there must be a portion of the shell at discharge pressure unless the casing is enlarged to provide for the placement of a sealed muffler therein and the heat transfer between the muffler and suction gas is ignored. For scroll compressors, a check valve must be located in the discharge passage to prevent the compressor from running as an expander due to the reversed pressure differential upon stopping.

### Summary Of The Invention

A low side scroll compressor is provided with an assembly which has an outer portion which separates the high pressure gas from the low pressure gas. An inner portion defines a muffler to attenuate discharge pulsations and noise. The inner portion also carries a check valve to prevent reverse rotation of the scroll wraps due to the reversed pressure differential when the compressor is stopped. Also, by locating the check valve at, or close to, the discharge port, it can contribute to efficiency enhancement at off-design operation.

It is an object of this invention to provide a single assembly incorporating a muffler, separator plate and check valve. It is another object of this invention to locate the check valve at the discharge port for off-condition performance improvement. These objects, and others as will become apparent hereinafter, are accomplished by the present invention.

Basically, the shell of a hermetic compressor is divided into a suction plenum and a discharge plenum by a separator plate. The separator plate is a portion of a combined muffler, separator plate and check valve assembly.

### Brief Description Of The Drawings

For a fuller understanding of the present invention, reference should now be made to the following detailed description thereof taken in conjunction with the accompanying drawings wherein:

Figure 1 is a partial cutaway sectional view of a portion of a low side hermetic scroll compressor employing the present invention;

Figure 2 is a top view of the present invention;

Figure 3 is a sectional view taken along line 3-3 of Figure 2; and

Figure 4 is a sectional view of the valve structure.

### Description Of The Preferred Embodiments

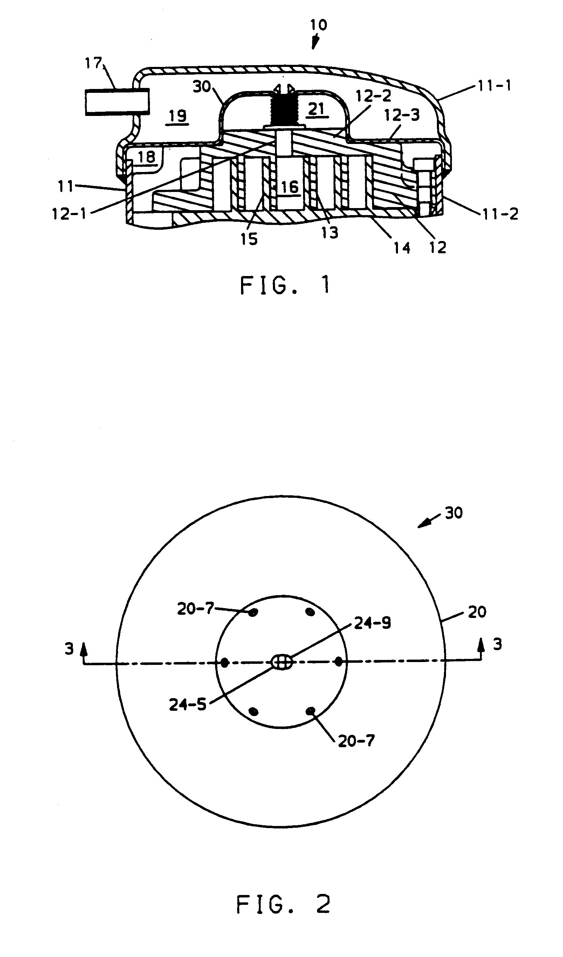

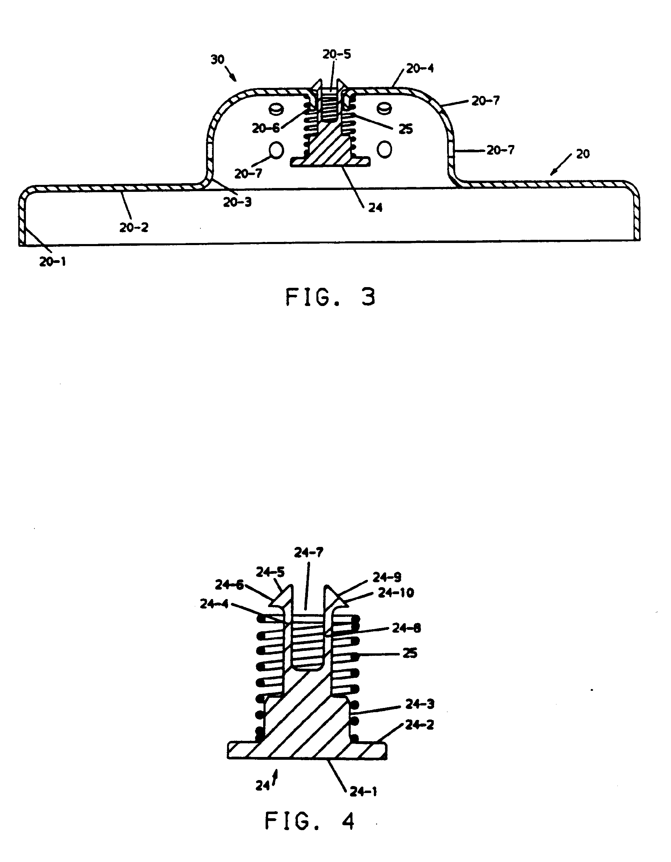

In Figure 1, the numeral 10 generally designates a low side hermetic scroll compressor having a shell or casing 11. A fixed scroll 12 having a wrap 13 and an orbiting scroll 14 having a wrap 15 are located in shell or casing 11 in any suitable manner. A generally axial discharge port 12-1 is formed in fixed scroll 12. The side of fixed scroll 12 opposite wrap 13 and through which discharge port 12-1 extends includes a raised central cylindrical portion 12-2 protecting from a flat, annular portion 12-3. As best shown in Figures 2 and 3, combined muffler, separator plate and check valve assembly 30 includes a single plate member 20 having an outer axially extending annular portion 20-1, an outer flat annular portion 20-2, an inner axially extending annular portion 20-3, an inner annular portion 20-4 surrounding a collar 20-6 defining port 20-5. Referring again to Figure 1, it will be noted that shell or casing 11 includes an upper shell 11-1 and a middle shell 11-2 with outer axially extending annular portion 20-1 being located and welded or otherwise hermetically sealed between shells 11-1 and 2 in the assembled compressor 10. Flat annular portion 12-3 engages outer flat annular portion 20-2 such that flat annular portion 20-2 is distorted slightly so as to produce a spring bias tending to keep flat annular portions 12-3 and 20-2 in engagement. Additionally an adhesive or other suitable sealing means is provided between flat annular portions 12-3 and 20-2 to keep them in engagement and to provide a seal. With member 20 thus sealed to casing 11 and fixed scroll 12, the interior of casing 11 is divided into a suction plenum 18 and a discharge plenum 19 so that the differential pressure across member 20 also tends to keep flat annular portions 12-3 and 20-2 in engagement.

With flat annular portions 12-3 and 20-2 in engagement, inner axial annular portion 20-3 and inner flat annular portion 20-4 define a generally cylindrical muffler and separate discharge port 12-1 from discharge plenum 19. Assembly 30 further includes check valve member 24 and coil spring 25.

Valve member 24 is made of a suitable light weight and durable material such as plastic and includes a flat portion 24-1 which engages raised central cylindrical cylindrical portion 12-2 to block discharge port 12-1, a cylindrical portion 24-3 coacting with flat portion 24-1 to define shoulder 24-2, and a pair of axially extending legs 24-4 and 8 which are separated by slot 24-7 and terminate in radially extending feet 24-5 and 9 having axially tapered portion 24-6 and 10, respectively. In assembling the check valve member 24 in assembly 30, spring 25 is placed over legs 24-4 and 8 and cylindrical portion 24-3 so that one end of spring 25 rests on shoulder 24-2. Tapered portions 24-6 and 10 of feet 24-5 and 9 are inserted into collar 20-6 and forced thereinto so that legs 24-4 and 8 are deflected inwardly permitting feet 24-5 and 9 to enter and pass through collar 20-6. When feet 24-5 and 9 pass through collar 20-6, the resiliency of legs 24-4 and 8 cause them to return to their unstressed positions whereby feet 24-5 and 9 prevent removal of valve 24 from collar 20-6. In the assembled device, the other end of spring 25 surrounds collar 20-6 and tends to bias valve 24 into engagement with fixed scroll 12 whereby flat portion 24-1 closes discharge port 12-1.

In operation, high pressure gas compressed by the motion of orbiting scroll 14 relative to fixed scroll 12 exits the compression chamber 16 through discharge port 12-1 by lifting valve member 24 against the bias of spring 25. The compressed gas passing through discharge port 12-1 enters the muffler cavity 21 formed by plate member 20 and fixed scroll 12. The compressed gas passes from muffler cavity 21 to discharge plenum 19 via holes 20-7 in portions 20-3 and/or 20-4 of plate member 20. Depending upon the spacing between the coils of spring 25 and the position of slot 24-7 when valve member 24 is open, an additional fluid path between muffler cavity 21 and discharge plenum 19 may be established. The compressed gas passes from discharge plenum 19 via discharge tube 17 which connects to the condenser (not illustrated) of a refrigeration system.

Upon the stopping of compressor 10, the high pressure gas in discharge plenum 19 would tend to run the compressor backwards, i.e. as an expander, unless so prevented by the valve 24. Additionally, because discharge plenum 19 is connected to the condenser of a refrigeration circuit (not illustrated) liquid refrigerant can be drawn into the compressor and cause liquid slugging upon start up of the compressor.

## Claims

1.  A combined muffler and separator plate for use in a hermetic compressor having a casing (11) and compressing means (12) in said casing (11) comprising:

    a single member (20) having a first portion (20-1) adapted to be located in and sealed to said casing (11),

    said member (20) having a second portion (20-2) extending radially inwardly from said first portion (20-1) and adapted to be sealed to said compressing means (12), so that said member (20) is sealed to said casing (11) and said compressing means (12) and said second portion (20-2) divides said casing (11) into a suction plenum (18) and a discharge plenum (19),

    said member (20) having a third portion (20-3, 20-4) located radially inward from said second portion (20-2), said third portion (20-3, 20-4) providing a muffler comprising a cavity (21) disposed between said compressor means (12) and said discharge plenum (19),

    characterized in that said third portion (20-3, 20-4) comprises a generally axially extending portion (20-3) and an inner portion (20-4) extending radially inwardly from said axially extending portion (20-3) to thereby define said muffler cavity (21),

    and in further comprising a plurality of holes (20-7) in said third portion (20-3, 20-4) whereby a fluid flow path is established between said Muffler cavity (21) and said discharge plenum (19).

2.  The combined muffler and separator plate of claim 1, characterized in further including valve means (24,25) and said third portion (20-3, 20-4) including means (20-6) for receiving and supporting said valve means (24,25).

3.  The combined muffler and separator plate of claim 1, characterized in that said third portion (20-3, 20-4) is generally cylindrical, said second portion (20-2) is radially extending and generally annular and said first portion (20-1) is axially extending and generally annular.

4.  The combined muffler and separator plate of claim 2, characterized in that said valve means (24,25) comprises a normally closed check valve (24).

## Patentansprüche

1.  Kombination aus Schalldämpfer und Trennplatte zur Verwendung in einem hermetischen Kompressor mit einem Gehäuse (11) und einer Komprimiereinrichtung (12) in dem Gehäuse (11), mit: einem einzelnen Teil (20), das einen ersten Teil (20-1) hat, der zum Einsetzen in das und zum Abdichten an dem Gehäuse (11) vorgesehen ist, wobei das Teil (20) einen zweiten Teil (20-2) hat, der sich von dem ersten Teil (20-1) radial einwärts erstreckt und zum Abdichten an der Komprimiereinrichtung (12) vorgesehen ist, so daß das Teil (20) an dem Gehäuse (11) und der Komprimiereinrichtung (12) abgedichtet ist und der zweite Teil (20-2) das Gehäuse (11) in eine Saugkammer (18) und eine Druckkammer (19) unterteilt, wobei das Teil (20) einen dritten Teil (20-3, 20-4) hat, der radial einwärts von dem zweiten Teil (20-2) angeordnet ist, wobei der dritte Teil (20-3, 20-4) einen Schalldämpfer bildet, der einen Hohlraum (21) aufweist, welcher zwischen der Kompressoreinrichtung (12) und der Druckkammer (19) angeordnet ist, dadurch gekennzeichnet, daß der dritte Teil (20-3, 20-4) einen sich insgesamt axial erstreckenden Teil (20-3) und einen sich von dem sich axial erstreckenden Teil (20-3) aus radial einwärts erstreckenden inneren Teil (20-4) aufweist, um dadurch den Schalldämpferhohlraum (21) zu bilden, und daß weiter mehrere Löcher (20-7) in dem dritten Teil (20-3, 20-4) vorgesehen sind, wodurch ein Fluidströmungsweg zwischen dem Schalldämpferhohlraum (21) und der Druckkammer (19) vorhanden ist.

2. Kombination aus Schalldämpfer und Trennplatte nach Anspruch 1, dadurch gekennzeichnet, daß eine Ventileinrichtung (24, 25) vorgesehen ist und daß der dritte Teil (20-3, 20-4) eine Einrichtung (20-6) aufweist zum Aufnehmen und Tragen der Ventileinrichtung (24, 25).

3. Kombination aus Schalldämpfer und Trennplatte nach Anspruch 1, dadurch gekennzeichnet, daß der dritte Teil (20-3, 20-4) insgesamt zylindrisch ist, daß sich der zweite Teil (20-2) radial erstreckt und insgesamt ringförmig ist und daß sich der erste Teil (20-1) axial erstreckt und insgesamt ringförmig ist.

4. Kombination aus Schalldämpfer und Trennplatte nach Anspruch 2, dadurch gekennzeichnet, daß die Ventileinrichtung (24, 25) ein normalerweise geschlossenes Rückschlagventil (24) aufweist.

## Revendications

1. Silencieux et plaque de séparation combinés, destinés à être utilisés dans un compresseur hermétique muni d'un boîtier (11) et d'un moyen de compression (12) dans ledit boîtier (11), comprenant :

un élément unique (20) muni d'une première portion (20-1) conçue pour être installée et étanchée dans ledit boîtier (11),

ledit élément (20) possédant une seconde portion 20-2 s'étendant radialement vers l'intérieur par rapport à ladite première portion (20-1) et conçue pour être rendue étanche par rapport audit moyen de compression (12), si bien que ledit élément (20) est rendu étanche par rapport audit boîtier (11) et audit moyen de compression (12), et ladite seconde portion (20-2) divise ledit boîtier (11) en un caisson d'aspiration (18) et en un caisson de refoulement (19),

ledit élément (20) possédant une troisième portion (20-3, 20-4) située radialement vers l'intérieur par rapport à ladite seconde portion (20-2), ladite troisième portion (20-3, 20-4) procurant un silencieux comprenant une cavité (21) disposée entre ledit moyen de compresseur (12) et ledit caisson de refoulement (19),

caractérisés en ce que ladite troisième portion (20-3, 20-4) comprend une portion (20-3) s'étendant généralement en direction axiale et une portion interne (20-4) s'étendant radialement vers l'intérieur par rapport à ladite portion (20-3) s'étendant en direction axiale, afin de définir ainsi ladite cavité de silencieux (21),

et comprenant, en outre, plusieurs trous (20-7) pratiqués dans ladite troisième portion (20-3, 20-4), par lesquels on établit une voie d'écoulement de fluide entre ladite cavité de silencieux (21) et ledit caisson de refoulement (19).

2. Silencieux et plaque de séparation combinés selon la revendication 1, caractérisée en ce qu'ils englobent, en outre, un moyen de soupape (24, 25), la dite troisième portion (20-3, 20-4) englobant un moyen (20-6) destiné à la réception et au support dudit moyen de soupape (24, 25).

3. Silencieux et plaque de séparation combinés selon la revendication 1, caractérisés en ce que ladite troisième portion (20-3, 20-4) est généralement cylindrique, ladite seconde portion (20-2) s'étend en direction radiale et est généralement annulaire, et ladite première portion (20-1) s'étend en direction axiale et est généralement annulaire.

4. Silencieux et plaque de séparation combinés selon la revendication 2, caractérisés en ce que ledit moyen de soupape (24, 25) comprend une soupape d'arrêt (24) normalement fermée.

FIG. 1

FIG. 2

FIG. 3

FIG. 4